# EUROPÄISCHE PATENTSCHRIFT

(11) **EP 1 516 495 B1**
(45) Veröffentlichungstag und Bekanntmachung des Hinweises auf die Patenterteilung: **27.02.2013**
(21) Anmeldenummer: 03759823.2
(22) Anmeldetag: 30.05.2003
(51) Int. Cl.: H04N 21/43

(54) **VERFAHREN ZUR GENERIERUNG EINES SYSTEMTAKTES EINER EMPFANGSEINRICHTUNG UND EMPFANGSEINRICHTUNG HIERZU**
METHOD FOR CREATING A SYSTEM CLOCK IN A RECEIVER DEVICE AND CORRESPONDING RECEIVER DEVICE
PROCEDE POUR GENERER UNE CADENCE DE SYSTEME D'UN DISPOSITIF DE RECEPTION ET DISPOSITIF DE RECEPTION CORRESPONDANT

(30) Priorität: 12.06.2002 DE 10226030
(43) Veröffentlichungstag der Anmeldung: 23.03.2005
(73) Patentinhaber: ROBERT BOSCH GMBH, 70442 Stuttgart (DE)
(72) Erfinder: BARTHEL, Joerg, 31139 Hildesheim (DE); MITTENDORF, Christian, 31137 Hildesheim (DE)
(86) Internationale Anmeldenummer: PCT/DE2003/001771
(87) Internationale Veröffentlichungsnummer: WO 2003/107714

(56) Entgegenhaltungen:
- EP-A- 1 076 461
- EP-A- 1 289 306
- WO-A-01/93579
- US-B1- 6 172 964
- INTERNATIONAL STANDARDS ORGANIZATION: "FINAL TEXT FOR DIS 11172-1 (REV.2): INFORMATION TECHNOLOGY: CODING OF MOVING PICTURES AND ASSOCIATED AUDIO FOR DIGITAL STORAGE MEDIA - PART 1 - CODING AT UP TO ABOUT 1.5 MBIT/S (ISO/IEC JTC 1/SC 29/WG 11 N 0156), PASSAGE TEXT" , CODED REPRESENTATION OF AUDIO, PICTURE MULTIMEDIA AND HYPERMEDIA INFORMATION (TENTATIVE TITLE). APRIL 20, 1992. ISO/IEC JTC 1/SC 29 N 147. FINAL TEXT FOR DIS 11172-1 (REV. 2): INFORMATION TECHNOLOGY - CODING OF MOVING PICTURES AND ASSOCIATED AUDIO FO XP002034584 Seite 36, letzte Zeile -Seite 37, Zeile 20 Seite 37, Zeile 36 -Seite 38, Zeile 2
- "INFORMATION TECHNOLOGY - GENERIC CODING OF MOVING PICTURES AND ASSOCIATED AUDIO INFORMATION: SYSTEMS" , INTERNATIONAL STANDARD, NEW YORK, NY, US, PAGE(S) I-XY,1-119 XP000667435 Seite 93, Zeile 1 -Seite 102, Zeile 11
- "DER MPEG-2-STANDARD MPEG-1 UND MPEG-2: UNIVERSELLE WERKZEUGE FUER DIGITALE VIDEO-UND AUDIO-APPLIKATIONEN (TEIL 1)" FERNSEH UND KINOTECHNIK, VDE VERLAG GMBH. BERLIN, DE, Bd. 48, Nr. 4, 1. April 1994 (1994-04-01), Seiten 155-163, XP000446902 ISSN: 0015-0142 in der Anmeldung erwähnt
- RIEMANN U: "DER MPEG-2-STANDARD MULTIPLEX-SPEZIFIKATION FUR DIE FLEXIBLE UBERTRAGUNG DIGITALER DATENSTROME" FERNSEH UND KINOTECHNIK, VDE VERLAG GMBH. BERLIN, DE, Bd. 48, Nr. 9, 1. September 1994 (1994-09-01), Seiten 460-462,464-46, XP000468751 ISSN: 0015-0142
- RIEMANN U: "DER MPEG-2-STANDARD GENERISCHE CODIERUNG FUR BEWEGTBILDER UND ZUGEHORIGER AUDIO-INFORMATION MULTIPLEX-SPEZIFIKATION FOR DIE FLEXIBLE UBERTRAGUNG DIGITALER DATENSTROME" FERNSEH UND KINOTECHNIK, VDE VERLAG GMBH. BERLIN, DE, Bd. 48, Nr. 10, 1. Oktober 1994 (1994-10-01), Seiten 545-550,553, XP000468290 ISSN: 0015-0142
- 'MPEG-1/2 Audio Header', [Online] 21 Juli 2009, Gefunden im Internet: <URL:http://www.fr-an.de/fragen/06/02_01.ht m> [gefunden am 2011-09-06]
- "DER MPEG-2-STANDARD. ÖMPEG-1 UND MPEG-2: UNIVERSELLE WERKZEUGE FUER DIGITALE VIDEO-UND AUDIO-APPLIKATIONEN (TEIL 1)", FKT FERNSEH UND KINOTECHNIK, FACHVERLAG SCHIELE & SCHON GMBH., BERLIN, DE, vol. 48, no. 4, 1 April 1994 (1994-04-01), pages 155-163, XP000446902, ISSN: 1430-9947

## Beschreibung

Die Erfindung betrifft ein Verfahren zur Generierung eines Systemtaktes einer Empfangseinrichtung für digitale Datenströme, wobei diese durch Abtastung analoger Signale (beispielsweise Audio oder Video) mit jeweils einer Abtastfrequenz in der Sendeeinrichtung erzeugt werden oder bereits als digitale Daten (beispielsweise Untertitel) vorliegen.

In digitalen multimedialen Systemen werden einzelne Datenströme, wie beispielsweise Video- und Audiodaten sowie Datenkanäle etc., mit unterschiedlichen Abtastraten digitalisiert. Dann haben die entsprechenden digitalen Datenströme keine offensichtlich gemeinsame Taktbasis. Um nach einer Übertragung der einzelnen Datenströme diese in einer Empfangseinheit wieder synchronisieren zu können, sind sowohl eine gemeinsame Taktbasis für die einzelnen Abtastraten, sowie Synchronisationspunkte zur gegenseitigen Ausrichtung der einzelnen Datenströme notwendig.

Mit dem Moving-Picture-Expert-Group-Standard (MPEG) wurden neben Codierungstechniken für Video- und Audiodatenströme auch syntaktische und semantische Regeln für die Paketierung der codierten Datenströme definiert, um die einzelnen Datenpakete jedes der paketierten Elementardatenströme (PES) später identifizieren und in ihrem richtigen zeitlichen Bezug zueinander darstellen zu können.

Der MPEG-Standard ist beispielsweise in D. Teichner; der MPEG-2-Standard in: Fernseh- und Kinotechnik, 48ter Jahrgang Nr. 4/1994, Seiten 155 bis 163 erläutert. Die MPEG-Systeme setzen hierbei eine einzige Zeitbasisreferenz für die Codierung und Decodierung voraus. Hierzu ist in dem Sender und Empfänger ein auf einer Frequenz von 90 kHz basierter Zähler, der sogenannte Programmzeitreferenz-Zähler (PCR), vorgesehen. Jedem Elementardatenpaket wird ein sogenannter Präsentations-Zeitpunkt (Presentation-Time-Stamp PTS), abgeleitet aus dem 90 kHz Zähler innerhalb des Senders, hinzugefügt, um den Zeitpunkt der Darstellung des Datenpakets in Relation zum aktuellen Stand eines Programmzeitreferenz-Zählers (PCR) im Empfänger zu beschreiben.

Der Systemtakt (f_{Sender}) des Senders wird durch kontinuierliche Übertragung der Werte eines Systemzeitreferenz-Zählers an den Empfänger übermittelt. Dieser wird direkt durch die Systemfrequenz betrieben. Zur gegenseitigen Synchronisation der einzelnen Datenströme (Audio, Video) wird der Programmzeitreferenz-Zählers (PCR) benötigt. Hierzu wird der Systemtakt (f_{Sender}) auf die Zählfrequenz des Programmzeitreferenz-Zählers heruntergeteilt und dem Programmzeitreferenz-Zähler zugeführt. Der Stand des PCR-Zählers wird dann als nummerischer Wert in Form der PTS in den einzelnen Datenpaketen des PES eingefügt. Zur Übertragung werden die unterschiedlichen PES für Audio, Video, Datenkanäle etc. sowie die Werte des Systemzeitreferenz-Zählers zu einem gemeinsamen Datenstrom, dem Transportdatenstrom zusammengefügt.

Das Problem bei der Synchronisierung der unterschiedlichen, aus dem Transportstrom rekonstruierten, einzelnen Datenströme in der Empfangseinrichtung besteht darin, dass die Werte des Systemzeitreferenz-Zählers innerhalb des gesamten Systems mit einer konstanten Verzögerung von der Sendeeinrichtung zur Empfangseinrichtung übertragen werden müssen. Anhand der Werte des Systemzeitreferenz-Zählers und deren zeitlichen Abstandes ist es möglich, den Systemtakt (f_{Sender}) des Senders in der Empfangseinrichtung wiederherzustellen. Dieser Systemtakt (STC) der Empfangseinrichtung taktet einen empfängerseitigen STC-Zähler (System-Time-Clock). Anhand der Differenz zwischen einem eintreffenden Wert des Systemzeitreferenz-Zählers und dem Stand des STC-Zählers wird die Frequenz des Systemtaktes STC nachgeführt. Gleichzeitig wird dieser Systemtakt STC zur Erzeugung der empfängerseitigen Abtastfrequenzen (f'_{Audio}, f'_{Video}, f'_{Daten}) für die verschiedenen Datenströme (Audio, Video, Datenkanäle) verwendet. Diese haben somit die gleiche Frequenz wie die entsprechenden Abtastfrequenzen (f_{Audio}, f_{Video}, f_{Daten}) der Sendeeinrichtung.

Zur gegenseitigen Synchronisation der einzelnen Datenströme werden diese anhand ihrer PTS-Marken zu der gemeinsamen Zeitbasis des Systemtakt-Zählers STC ausgerichtet. Dabei wird der Ausgabezeitpunkt eines jeweiligen Datums eines Datenstroms aus dem Ausgangsbuffer mittels des Systemtakt-Zählers und den jeweiligen PTS-Marken für jeden der einzelnen Datenströme separat bestimmt.

Das Problem bei der Synchronisation der Systemfrequenz zwischen Sender und Empfänger besteht darin, dass die Werte des Systemzeitreferenz-Zählers mit einer konstanten Verzögerung von der Sendeeinrichtung zur Empfangseinrichtung übertragen werden müssen, damit eine korrekte Wiedergewinnung des Systemtaktes STC in der Empfangseinrichtung möglich ist.

Aufgabe der Erfindung war es daher, ein Verfahren zur Generierung des STC-Zählers für digitale Datenströme in einer Empfangseinrichtung zu entwickeln, welches ohne die Übertragung des Systemzeitreferenz-Zählers und damit ohne die Generierung des Systemtaktes auskommt.

Die Aufgabe wird einem Verfahren und einer Vorrichtung mit den Merkmalen der unabhängigen Patentansprüche gelöst.

Durch die Synchronisation des STC-Zählers der Empfangseinrichtung mit der ermittelten Abtastfrequenz eines der Datenströme wird eine gemeinsame Zeitbasis für alle Datenströme bereitgestellt, ohne dass der eigentliche Systemtakt der Sendeeinrichtung zurückgewonnen werden muss. Im Unterschied zu den herkömmlichen Verfahren wird der STC-Zähler der Empfangseinheit somit durch die zurückgewonnene Abtastfrequenz und nicht durch einen zurückgewonnenen Systemtekt angesteuert.

Dabei ist es notwendig, dass die Schrittweite des STC-Zählers der Empfangseinheit so eingestellt wird, dass sich die Schrittweite aus dem Verhältnis der Frequenz des Programmzeitreferenztaktes PCR und der Abtastfrequenz des entsprechenden Datenstroms bestimmt. Dabei kann die Schrittweite konstant eingestellt werden, wobei das Verhältnis eines nominellen Programmzeitreferenztaktes PCR und einer nominellen Abtastfrequenz einmalig berechnet und eingegeben wird.

Die Schrittweite kann jedoch auch iterativ nachgeführt werden. Hierzu ist es vorteilhaft, wenn die Differenzen zwischen einer aktuellen Markierung im Elementardatenstrom zur Kennzeichnung des Programmzeitreferenztaktes und dem aktuellen Zählerstand des Systemtaktes STC berechnet werden. Die Schrittweite des Systemtaktes STC wird dann entsprechend der jeweils berechnete Differenz korrigiert.

Für die Verarbeitung mehrerer unterschiedlicher Datenströme, wie Audio-, Video- und Datenkanäle wird die Abtastfrequenz aus nur einem ausgewählten Datenstrom ermittelt und die unterschiedlichen Datenströme mittels des gemeinsamen STC-Zählers synchronisiert.

Besonders vorteilhaft ist es, wenn die Abtastfrequenz aus dem Elementardatenstrom ermittelt wird, der die größte Abtastfrequenz der verfügbaren Datenströme aufweist. In einem audiovisuellen System wird hierbei die Abtastfrequenz in der Regel aus dem Audio-Datenstrom ermittelt.

Weitere vorteilhafte Ausführungsformen der Empfangseinrichtung sind in den Unteransprüchen beschrieben.

Die Erfindung wird nachfolgend anhand der beigefügten Zeichnungen näher erläutert. Es zeigen:
- Figur 1 -: Blockdiagramm einer erfindungsgemäßen Empfangseinrichtung für digitale Datenströme;
- Figur 2 -: Diagramm des Wertes des STC-Zählers über die Zeit bei konstanter Schrittweite;
- Figur 3 -: Diagramm des Wertes des STC-Zählers über die Zeit bei einer Korrektur der Schrittweite.
- Figur 4 -: Blockdiagramm einer herkömmlichen Sendeeinrichtung für digitale Datenströme;
- Figur 5 -: Blockdiagramm einer herkömmlichen Empfangseinrichtung für digitale Datenströme;

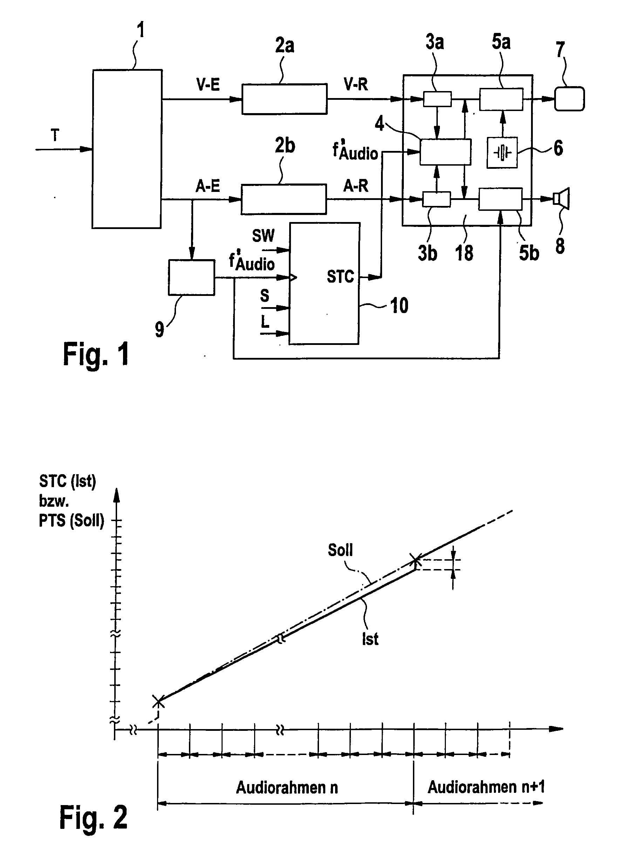

Die Figur 1 lässt die erfindungsgemäße Empfangseinrichtung für digitale Datenströme als Blockschaltbild erkennen. Die Empfangseinrichtung hat einen Transportstrom-Demultiplexer und De-Paketierer 1, um einen Transportdatenstrom T, der beispielsweise nach dem MPEG-Standard aufgebaut ist, in bekannter Weise in Elementardatenströme E für die unterschiedlichen Dateninhalte, d. h. einen Video-Elementardatenstrom V-E und einen Audio-Elementardatenstrom A-E zu demultiplexen und depaketieren. Der Transportdatenstrom-Demultiplexer und De-Paketierer 1 dient weiterhin zum Extrahieren der Presentation-Time-Stamps PTS aus den paketierten Elementardatenströmen, mit denen die einzelnen Datenpakete durch Synchronisation mit dem gemeinsamen STC-Zähler zu den richtigen Zeitpunkten zusammengesetzt und angezeigt werden können.

Weiterhin sind bekannte Dekoder 2a, 2b für die Video-Datenströme V-E und Audio-Datenströme A-E vorhanden. An den Ausgängen der Dekoder 2a, 2b sind die Video-Rohdaten V-R und die Audio-Rohdaten A-R verfügbar. Die Video-Rohdaten V-R und Audio-Rohdaten A-R werden jeweils in einem Zwischenspeicher 3a, 3b gepuffert und mit einer Ausgabekontrolleinheit 4, durch STC-Zähler und PTS Vergleich gesteuert, jeweils einem Digital-Analog-Konverter 5a, 5b zugeführt, die mit der entsprechenden Abtastfrequenz f'_{Video} und f4_{Audio} für die entsprechenden Rohdaten V-R und A-R getaktet werden. Die Taktung erfolgt einerseits für Audio mit Hilfe der zurückgewonnene Abtastfrequenz f'_{Audio} und andererseits für Video mit Hilfe einer separaten Taktquelle 6 mit der Abtastfrequenz f'_{Video}. Die VideoDaten werden anschließend als analoge Daten auf einem Monitor 7 und die analogen Audiodaten auf einem Lautsprecher 8 wiedergegeben.

Zur Generierung des STC-Zählers wird in einer Einheit 9 in bekannter Weise die Abtastfrequenz f'_{Abtast} eines der Datenströme, hier beispielsweise des Audio-Elementardatenstroms A-E (f'_{Audio}) ermittelt und als Takt für den STC-Zähler 10 verwendet. In der Zähleinheit 10 werden ausgehend von einem Startwert S Programmzeittakt-Werte gezählt. Das Laden des Startwertes S, beispielsweise eines Audio-PTS-Wertes, erfolgt durch ein Ladesignal L vorzugsweise zu Beginn jeweils eines Audio-Rahmens.

Die Schrittweite SW des Systemtaktes STC wird beispielsweise mit einem konstanten Teiler eingestellt. Die Schrittweite SW wird hierbei aus dem Verhältnis des nominalen Programmzeitreferenztaktes PCR zu der nominalen Abtastfrequenz f_{Abtast} des Elementardatenstroms E, der zur Fortschaltung des STC-Zählers verwendet wird, bestimmt.

Bei einem MPEG-basierten System kann die Abtastfrequenz des Audio-Datenstroms A-E z. B. 48 kHz und die Abtastfrequenz des Video-Datenstroms V-E 25 Hz, d. h. 25 Bilder pro Sekunde, betragen. Der Systemtakt f_{Sender} ist auf 27 MHz festgelegt, so dass der hieraus abgeleitete Programmzeitreferenztakt PCR aus dem Teilerverhältnis 1 zu 300 zu 90 kHz definiert ist. Die Schrittweite SW der Synchronisationseinheit 10 entspricht dann dem Verhältnis aus dem Original-Programmzeitreferenztakt PCR und der Abtastfrequenz, d. h. 90 kHz : 48 kHz = 1,875. Die Synchronisationseinheit ist zur Bearbeitung der Nachkommastellen daher nicht als Integer-Zähler, sondern vorzugsweise als Festkomma-Zähler ausgeführt.

Der Startwert S wird ursprünglich durch die Systemzeitreferenztakt-Marken in der Sendeeinheit festgelegt, so dass auch der STC-Zähler an der Empfangseinheit initialisiert werden muss. Hierzu werden die PTS-Marken innerhalb des paketierten Elementardatenstroms E verwendet, dessen Abtastfrequenz für die Fortschaltung des Zählers der Synchronisationseinheit 10 benutzt wird. Um zusätzlich das "Weglaufen" des Zählers der Synchronisationseinheit 10 z. B. durch eine nicht korrekt eingestellte Schrittweite SW zu verhindern, wird der Zähler der Synchronisationseinheit 10 regelmäßig mit den PTS-Marken rekalibriert. Dies geschieht vorzugsweise zu dem Zeitpunkt, zu dem jeweils mit der Ausgabe eines neuen Rahmens begonnen wird, also entsprechend dem Zeitintervall der Speicherung der PTS-Marken.

Bei einer fest eingestellten Schrittweite SW kann der Zähler der Synchronisationseinheit 10 jedoch aufgrund der Abweichung zwischen der tatsächlichen Abtastfrequenz f'_{Abtast} und der nominellen Abtastfrequenz f_{Abtast} weglaufen, so dass die oben beschriebene Rekalibrierung des Zählers der Synchronisationseinheit 10 zu Sprüngen des STC-Zählerstandes führt. Dies ist in der Figur 2 zu erkennen. Es wird deutlich, dass der ideale Soll-Wert des STC-Zählers, der gestrichelt dargestellt ist, sich im Laufe der Zeit von dem Ist-Wert STC-Zählers unterscheidet. Bei korrekter Schrittweise SW wäre der Ist Wert-Verlauf streng linear.

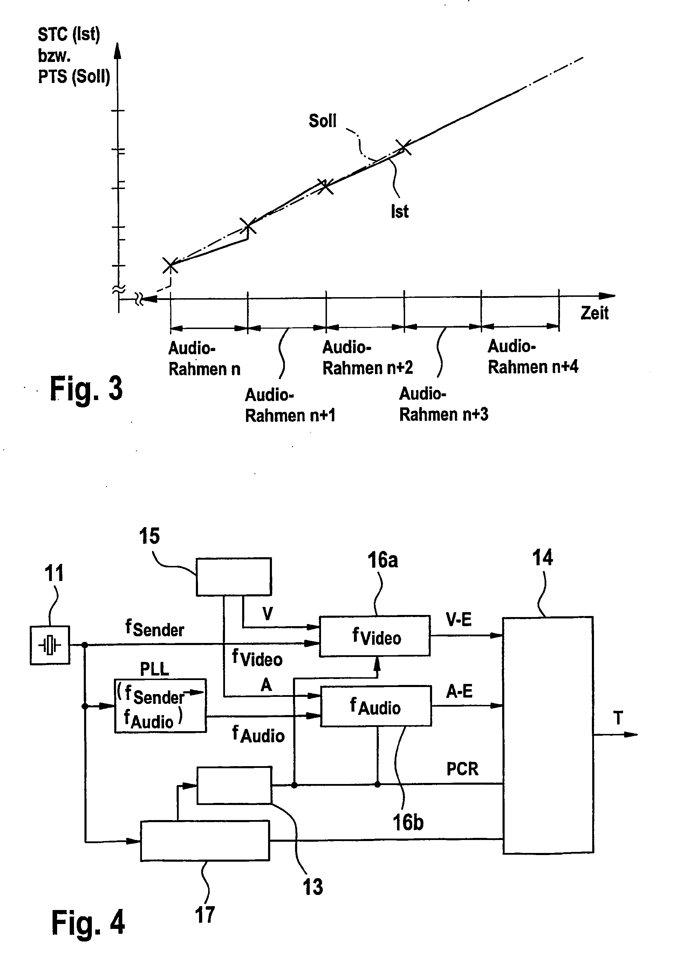

Vorzugsweise wird daher, wie in der Figur 3 als Diagramm der Werte des STC-Zählers über die Zeit gezeigt, die Schrittweite SW des Zählers der Synchronisationseinheit 10 iterativ angepasst. Hierzu wird die Differenz zwischen dem Ist-Wert des STC-Zählers und dem gestrichelt dargestellten Soll-Wert des STC-Zählers kontinuierlich berechnet und die Schrittweite SW nach Bearbeitung eines Audiorahmens N entsprechend der Differenz korrigiert.

Die Figur 4 lässt ein Blockdiagramm einer herkömmlichen Sendereinheit für digitale Datenströme erkennen. Die Sendeeinheit hat einen zentralen Taktgenerator 11 zur Erzeugung eines Systemtakts f_{Sender}. Die Systemtaktfrequenz f_{Sender} beträgt beispielsweise bei MPEG-Sendeeinrichtungen 27 MHz.

Der Systemtakt f_{Sender} wird mit einem PCR-Extension-Zähler 17 im Verhältnis 1 zu 300 geteilt. Das 1 zu 300 geteilte Signal steuert den PCR-Zähler 13. PCR und PCR-Extension Zähler bilden gemeinsam den Systemzeitreferenzzähler. Der Wert des PCR-Zählers 13 wird zur Ableitung der Presentation Time Stamps (PTS) an die Enkoder und Paketierer 16a und 16b übermittelt. Der Systemzeitreferenzzähler wird an den Transportstromgenerator 14 übermittelt. In dem Transportstromgenerator 14 erfolgt ein Multiplexen der paketierten Video- und Audio-Elementardatenströme V-E und A-E sowie ein Einfügen der Systemzeitreferenzzähler-Marken (PCR und PCR-Extension) in den Transportstrom T. Der entsprechende Aufbau des Transportstroms T ist in dem MPEG-Standard hinreichend spezifiziert.

Zur Generierung der paketierten Video- und Audio-Elementardatenströme V-E und A-E werden analoge Video- und Audio-Signale V und A aus einer Analogquelle 15 mit jeweils einer definierten Abtastrate f_{Video}, für die analogen Videosignale und f_{Audio} für die analogen Audiosignale jeweils in einem Enkoder und Paketierer 16 a, 16 b abgetastet, komprimiert und paketiert.

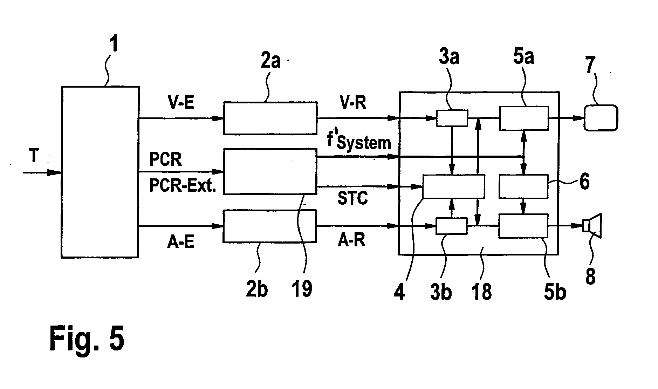

Die Figur 5 lässt eine herkömmliche Empfangseinrichtung erkennen, die wiederum einen Transportdatenstrom-Demultiplexer 1, Dekoder und De-paketierer 2a, 2b und eine Ausgabesteuereinheit 18 zur Synchronisation und Darstellung der Datenströme enthält.

Der Systemtakt wird hierbei in einer Konvertierungseinheit 19 aus den Systemzeitreferenz-Marken PCR und der PCR-Extension zurückgewonnen und hieraus eine Systemfrequenz f'_{System} zurückgewonnen, die dem Systemtakt f_{System} des Senders entspricht. Dabei müssen die Systemzeitreferenz-Marken jedoch innerhalb des gesamten Systems von der Sendeeinheit zur Empfangseinheit mit einer konstanten Verzögerung übertragen werden, um sicherzustellen, dass der zeitliche Abstand aufeinanderfolgender Marken äquivalent zu deren Differenz ist. Die Empfangseinrichtung ist dann nicht mehr funktionsfähig, wenn das System kein konstantes Endzu-End Delay für die Übertragung der Systemzeitreferenz-Marken gewährleistet.

## Patentansprüche

1. Verfahren zur Generierung eines System-Time-Clock (STC)-Zählers einer Empfangseinrichtung für digitale Elementardatenströme (E), beinhaltend ein Demultiplexen eines Transportdatenstroms (T) in paketierte Elementardatenströme (E) und Extrahieren von Markierungen zur Kennzeichnung des Präsentationszeitpunkts (Presentation Time Stamp; PTS), wobei die Elementardatenströme durch Abtastung in einer Sendeeinrichtung erzeugt werden, und Ermitteln einer nominellen Abtastfrequenz (f_{Abtast}) eines Datenstroms in der Empfangseinrichtung aus einem Elementardatenstrom und Generieren einer tatsächlichen Abtastfrequenz (f'_{Abtast}) als Takt, **gekennzeichnet durch**
- Verwenden der tatsächlichen Abtastfrequenz (f'_{Abtast}) als Takt für den STC-Zähler und
- Einstellen einer Schrittweite des STC-Zählers, wobei sich die Schrittweite aus dem Verhältnis des Programmzeitreferenztaktes (PCR) und der nominellen Abtastfrequenz (f_{Abtast}) bestimmt, und
- Kalibrieren des STC-Zählers mit den PTS-Marken entsprechend dem Zeitintervall der Speicherung der PTS-Marken.

2. Verfahren nach Anspruch 1, **gekennzeichnet durch** den Vergleich des aktuellen Präsentations-Zeitpunktes (Presentation Time Stamp PTS) des zur Ermittlung der Abtastfrequenz herangezogenen paketierten Elementardatenstroms (E) und des aktuellen Zählerstands des STC-Zählers und Korrektur der Schrittweite des STC-Zählers entsprechend des Vergleichsergebnisses.

3. Verfahren nach einem der vorhergehenden Ansprüche, **dadurch gekennzeichnet, dass** die tatsächliche Abtastfrequenz (f'_{Abtast}) aus dem Datenstrom generiert wird, der die größte nominelle Abtastfrequenz (f_{Abtast}) der verfügbaren Datenströme aufweist.

4. Verfahren nach einem der vorhergehenden Ansprüche, **dadurch gekennzeichnet, dass** die paketierten Elementardatenströme (E) nach einem Moving-Picture-Expert-Group-Standard (MPEG) komprimierte Video- und Audiodatenströme sind.

5. Empfangseinrichtung mit
einem Transportdatenstrom-Demultiplexer (1) zum Demultiplexen eines Transportdatenstroms (T) in paketierte Elementardatenströme (E) und Extrahieren von Markierungen zur Kennzeichnung des Präsentations-Zeitpunktes (Presentation Time Stamp; PTS);
einer Einheit (9) zur Ermittlung einer nominellen Abtastfrequenz (f_{Abtast}) eines Datenstroms aus einem Elementardatenstrom und zur Generierung einer tatsächlichen Abtastfrequenz (f'_{Abtast}) als Takt;
einer Ausgabesteuereinheit (18) zur Synchronisation der aus den paketierten Elementardatenströmen (E) gewonnenen Datenströme, und
einer Synchronisationseinheit (10) zur Generierung eines STC-Zählers, **dadurch gekennzeichnet, dass**
die Synchronisationseinheit (10) zur Verwendung der tatsächlichen Abtastfrequenz (f'_{Abtast}) als Takt für den STC-Zähler ausgebildet ist;
die Synchronisationseinheit (10) zum Einstellen einer Schrittweite (SW) des STC-Zählers ausgebildet ist, wobei sich die Schrittweite (SW) aus dem Verhältnis eines Programmzeitreferenztaktes und der nominellen Abtastfrequenz (f_{Abtast}) bestimmt und
die Synchronisationseinheit (10) entsprechend dem Zeitintervall der Speicherung der PTS-Marken zur Kalibrierung des STC-Zählers mit den PTS-Marken ausgebildet ist.

6. Empfangseinrichtung nach Anspruch 5, **dadurch gekennzeichnet, dass** die Synchronisationseinheit (10) zum Vergleich des aktuellen Präsentations-Zeitpunktes (Presentation Time Stamp PTS) des zur Ermittlung der Abtastfrequenz herangezogenen paketierten Elementardatenstroms (E) und des aktuellen Zählerstands des STC-Zählers und Korrektur der Schrittweite (SW) des STC-Zählers entsprechend des Vergleichsergebnisses ausgebildet ist.

7. Empfangseinrichtung nach einem der Ansprüche 5 oder 6 für mehrere unterschiedliche paketierte Elementardatenströme (V-E, A-E), **dadurch gekennzeichnet, dass** die Einheit (9) zur Generierung der tatsächlichen Abtastfrequenz (f'_{Abtast}) aus einem ausgewählten paketierten Elementardatenstrom (E) der unterschiedlichen paketierten Elementardatenströme (V-E, A-E) und die Ausgabesteuereinheit (18) zur Synchronisation aller paketierten Elementardatenströme (E) mit dem synchronisierten STC-Zähler ausgebildet sind.

8. Empfangseinrichtung nach Anspruch 7, **dadurch gekennzeichnet, dass** die tatsächliche Abtastfrequenz (f'_{Abtast}) aus dem Elementardatenstrom (E) generiert wird, der die größte nominelle Abtastfrequenz (f_{Abtast}) der verfügbaren paketierten Elementardatenströme (V-E, A-E) aufweist.

9. Empfangseinrichtung nach einem der Ansprüche 5 bis 8, die zum Verarbeiten von paketierten Elementardatenströmen (E) ausgebildet ist, die nach dem Moving-Picture-Expert-Group-Standard (MPEG) komprimierte Video- und Audiodatenströme sind.

## Claims

1. Method for generating a system time clock (STC) counter for a reception device for digital elementary data streams (E), containing demultiplexing of a transport data stream (T) into packetized elementary data streams (E) and extraction of markers for denoting the presentation time (Presentation Time Stamp; PTS), wherein the elementary data streams are produced by sampling in a transmission device, ascertainment of a nominal sampling frequency (f_{sampling}) for a data stream in the reception device from an elementary data stream and generation of an actual sampling frequency (f'_{sampling}) as a clock, **characterized by**
- use of the actual sampling frequency (f'_{sampling}) as a clock for the STC counter,
- setting of a step size for the STC counter, the step size being determined from the ratio of the program time reference clock (PCR) and the nominal sampling frequency (f_{sampling}), and
- calibration of the STC counter using the PTS markers in line with the time interval for the storage of the PTS markers.

2. Method according to Claim 1, **characterized by** the comparison of the current presentation time (Presentation Time Stamp; PTS) for the packetized elementary data stream (E) used for ascertaining the sampling frequency and of the current counter reading from the STC counter, and correction of the step size for the STC counter in line with the comparison result.

3. Method according to either of the preceding claims, **characterized in that** the actual sampling frequency (f'_{sampling}) is generated from the data stream which has the highest nominal sampling frequency (f_{sampling}) of the available data streams.

4. Method according to one of the preceding claims, **characterized in that** the packetized elementary data streams (E) are video and audio data streams compressed on the basis of a moving picture experts group (MPEG) standard.

5. Reception device having
a transport data stream demultiplexer (1) for demultiplexing a transport data stream (T) into packetized elementary data streams (E) and extracting markers for denoting the presentation time (Presentation Time Stamp; PTS);
a unit (9) for ascertaining a nominal sampling frequency (f_{sampling}) for a data stream from an elementary data stream and for generating an actual sampling frequency (f'_{sampling}) as a clock;
an output control unit (18) for synchronizing the data streams obtained from the packetized elementary data streams (E), and
a synchronization unit (10) for generating an STC counter, **characterized in that**
the synchronization unit (10) is designed to use the actual sampling frequency (f'_{sampling}) as a clock for the STC counter;
the synchronization unit (10) is designed to set a step size (SW) for the STC counter, the step size (SW) being determined from the ratio of a program time reference clock and the nominal sampling frequency (f_{sampling}), and
the synchronization unit (10) is designed to calibrate the STC counter using the PTS markers in line with the time interval for the storage of the PTS markers.

6. Reception device according to Claim 5, **characterized in that** the synchronization unit (10) is designed to compare the current presentation time (Presentation Time Stamp; PTS) for the packetized elementary data stream (E) used for ascertaining the sampling frequency and the current counter reading from the STC counter and to correct the step size (SW) for the STC counter in line with the comparison result.

7. Reception device according to either of Claims 5 and 6, for a plurality of different packetized elementary data streams (V-E, A-E), **characterized in that** the unit (9) is designed to generate the actual sampling frequency (f'_{sampling}) from a selected packetized elementary data stream (E) from the different packetized elementary data streams (V-E, A-E), and the output control unit (18) is designed to synchronize all the packetized elementary data streams (E) with the synchronized STC counter.

8. Reception device according to Claim 7, **characterized in that** the actual sampling frequency (f'_{sampling}) is generated from the elementary data stream (E) which has the highest nominal sampling frequency (f_{sampling}) of the available packetized elementary data streams (V-E, A-E).

9. Reception device according to one of Claims 5 to 8, which is designed to process packetized elementary data streams (E) which are video and audio data streams compressed on the basis of the moving picture experts group (MPEG) standard.

## Revendications

1. Procédé pour générer un compteur d'horloge à temps réel de système (STC) d'un dispositif de réception pour des flux de données élémentaires numériques (E), comprenant un démultiplexage d'un flux de données de transport (T) en flux de données élémentaires en paquets (E) et l'extraction de repères pour identifier l'instant de présentation (horodatage de présentation ; PTS), les flux de données élémentaires étant générés par échantillonnage dans un dispositif d'émission, et détermination d'une fréquence d'échantillonnage nominale (f_{Abtast}) d'un flux de données dans le dispositif de réception à partir d'un flux de données élémentaire et génération d'une fréquence d'échantillonnage effective (f'_{Abtast}) en tant qu'horloge, **caractérisé par**
- l'utilisation de la fréquence d'échantillonnage effective (f'_{Abtast}) en tant qu'horloge pour le compteur STC et
- le réglage d'un pas du compteur STC, le pas étant déterminé à partir du rapport entre l'horloge de référence de temps de programme (PCR) et la fréquence d'échantillonnage nominale (f_{Abtast}), et
- le calibrage du compteur STC avec les repères PTS conformément à l'intervalle de temps de mise en mémoire des repères PTS.

2. Procédé selon la revendication 1, **caractérisé par** la comparaison de l'instant de présentation (horodatage de présentation ; PTS) actuel du flux de données élémentaires en paquets (E) utilisé pour déterminer la fréquence d'échantillonnage et de la valeur comptée actuelle du compteur STC et la correction du pas du compteur STC conformément au résultat de la comparaison.

3. Procédé selon l'une des revendications précédentes, **caractérisé en ce que** la fréquence d'échantillonnage effective (f'_{Abtast}) est générée à partir du flux de données qui présente la fréquence d'échantillonnage nominale (f_{Abtast}) la plus élevée parmi les flux de données disponibles.

4. Procédé selon l'une des revendications précédentes, **caractérisé en ce que** les flux de données élémentaires en paquets (E) sont des flux de données vidéo et audio comprimés selon une norme du MPEG (Moving Picture Expert Group - Groupe d'experts en images animées).

5. Dispositif de réception comprenant un démultiplexeur de flux de données de transport (1) pour démultiplexer un flux de données de transport (T) en flux de données élémentaires en paquets (E) et extraire des repères pour identifier l'instant de présentation (horodatage de présentation ; PTS) ;
une unité (9) pour déterminer une fréquence d'échantillonnage nominale (f_{Abtast}) d'un flux de données à partir d'un flux de données élémentaires et pour générer une fréquence d'échantillonnage effective (f'_{Abtast}) en tant qu'horloge ;
une unité de commande de sortie (18) pour synchroniser les flux de données obtenus à partir des flux de données élémentaires en paquets (E), et
une unité de synchronisation (10) pour générer un compteur STC, **caractérisé en ce que**
l'unité de synchronisation (10) est configurée pour utiliser la fréquence d'échantillonnage effective (f'_{Abtast}) en tant qu'horloge pour le compteur STC ; l'unité de synchronisation (10) est configurée pour régler un pas (SW) du compteur STC, le pas (SW) étant déterminé à partir du rapport entre une horloge de référence de temps de programme et la fréquence d'échantillonnage nominale (f_{Abtast}), et
l'unité de synchronisation (10) est configurée pour calibrer le compteur STC avec les repères PTS conformément à l'intervalle de temps de mise en mémoire des repères PTS.

6. Dispositif de réception selon la revendication 5, **caractérisé en ce que** l'unité de synchronisation (10) est configurée pour comparer l'instant de présentation (horodatage de présentation ; PTS) actuel du flux de données élémentaires en paquets (E) utilisé pour déterminer la fréquence d'échantillonnage et la valeur comptée actuelle du compteur STC et pour corriger le pas (SW) du compteur STC conformément au résultat de la comparaison.

7. Dispositif de réception selon l'une des revendications 5 ou 6 pour plusieurs flux de données élémentaires en paquets (V-E, A-E) différents, **caractérisé en ce que** l'unité (9) est configurée pour générer la fréquence d'échantillonnage effective (f'_{Abtast}) à partir d'un flux de données élémentaires en paquets (E) choisi parmi les différents flux de données élémentaires en paquets (V-E, A-E) et l'unité de commande de sortie (18) est configurée pour synchroniser tous les flux de données élémentaires en paquets (E) avec le compteur STC synchronisé.

8. Dispositif de réception selon la revendication 7, **caractérisé en ce que** la fréquence d'échantillonnage effective (f'_{Abtast}) est générée à partir du flux de données élémentaires en paquets (E) qui présente la fréquence d'échantillonnage nominale (f_{Abtast}) la plus élevée parmi les flux de données élémentaires en paquets (V-E, A-E) disponibles.

9. Dispositif de réception selon l'une des revendications 5 à 8, lequel est configuré pour traiter des flux de données élémentaires en paquets (E) qui sont des flux de données vidéo et audio comprimés selon la norme du MPEG (Moving Picture Expert Group - Groupe d'experts en images animées).
